Europäisches Patentamt

European Patent Office

Office européen des brevets

(19)

(11) Numéro de publication : **0 347 291 B1**

## (12) FASCICULE DE BREVET EUROPEEN

(45) Date de publication du fascicule du brevet :
04.11.92 Bulletin 92/45

(51) Int. Cl.⁵ : **F03D 9/00, F42C 15/28**

(21) Numéro de dépôt : **89401608.8**

(22) Date de dépôt : **09.06.89**

(54) **Eolienne à alimentation axiale, à échappement radial, à aubage à géométrie variable, et projectiles équipés d'une telle éolienne.**

(30) Priorité : **14.06.88 FR 8807907**

(43) Date de publication de la demande :
**20.12.89 Bulletin 89/51**

(45) Mention de la délivrance du brevet :
**04.11.92 Bulletin 92/45**

(84) Etats contractants désignés :
**BE CH DE ES GB GR IT LI NL SE**

(56) Documents cités :
**EP-A- 0 095 270
FR-A- 2 442 978
US-A- 2 766 964**

(73) Titulaire : **THOMSON-BRANDT ARMEMENTS
Tour Chenonceaux 204, rond-point du Pont de
Sèvres
F-92516 Boulogne-Billancourt (FR)**

(72) Inventeur : **Trouplin, Claude Thomson-CSF
SCPI
CEDEX 67
F-92045 Paris La Defense (FR)**

(74) Mandataire : **Benoit, Monique et al
THOMSON-CSF SCPI
F-92045 PARIS LA DEFENSE CEDEX 67 (FR)**

EP 0 347 291 B1

Jouve, 18, rue Saint-Denis, 75001 PARIS

## Description

L'invention concerne une éolienne à alimentation axiale, à échappement radial et à géométrie variable. Elle concerne également son application aux projectiles.

Une éolienne est un élément capable de convertir l'énergie des écoulements hydrauliques ou aérodynamiques en énergie mécanique de rotation.

De manière générale, ces éléments peuvent être classés en deux catégories selon que leur géométrie est fixe ou au contraire variable. Chacune de ces catégories présente des avantages et des inconvénients.

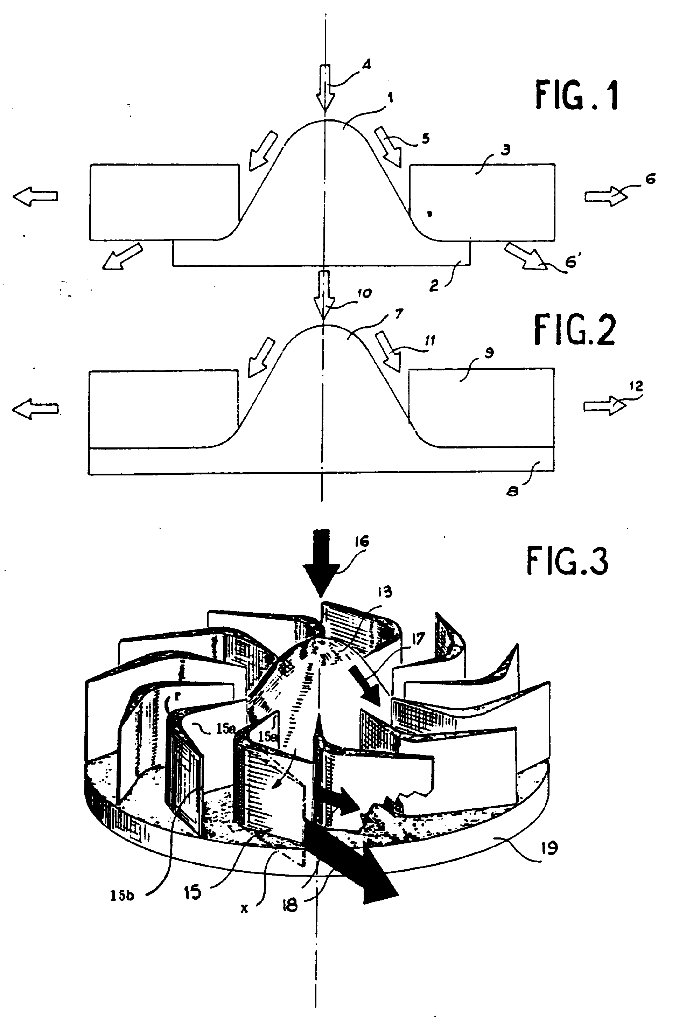

La figure 1 illustre schématiquement une éolienne de type connu de la catégorie dite à géométrie variable, ou plus exactement à pales déformables. Sur cette figure sont représentés par des flèches l'écoulement incident (4), puis l'écoulement (5) d'attaque des aubages (3) séparés par le déflecteur (1), et l'écoulement en sortie d'éolienne (6). Comme le montre cette figure 1, les aubages (3) ne sont liés au support (2) que par leur extrémité, ce qui a pour effet, compte tenu de l'élasticité du matériau, d'autoriser une expansion des aubages (3) quand ceux-ci sont soumis à la force centrifuge et à la pression de l'écoulement d'attaque (5). Le résultat de cette déformation est qu'à partir d'un certain débit de l'écoulement incident (4), la vitesse de rotation de l'éolienne tend à demeurer stable; on obtient par là-même un effet de régulation de vitesse qui peut être très utile en fonction du mécanisme entraîné par l'éolienne.

Toutefois, cette architecture présente deux inconvénients majeurs. D'abord une relative fragilité des aubages (3) due au fait que ceux-ci ne sont fixés à leur support (2) que par leur extrémité. Les aubages ainsi montés en porte-à-faux peuvent être particulièrement vulnérables aux efforts axiaux tels que par exemple, les efforts d'inertie dans le cas d'un système propulsé avec une accélération importante. Ensuite, un mauvais rendement à bas régime dû au fait que l'écoulement (5) a tendance à s'échapper de l'espace compris entre deux aubages (3), comme le représente l'écoulement de fuite (6').

Dans le domaine des géométries variables il existe des architectures où la régulation de vitesse s'effectue par limitation du débit d'air comme c'est le cas pour la turbine décrite dans le brevet US -A- 2.766.964.

Dans ce cas, les aubages sont à géométrie variable, la partir fixe et non déformable de chaque aubage étant située à la périphérie de la turbine, la partie mobile se déformant vers l'extérieur sous l'effet de la force centrifuge, de manière a ce que le débit d'air diminue quand la vitesse de rotation de la turbine augmente. La déformation des aubages vers l'extérieur rétrécit en effet le passage de l'air entre elles.

La figure 2 illustre schématiquement une éolienne de type connu de la catégorie dite à aubage fixe (pale indéformable). Sur cette figure sont également représentés par des flèches, l'écoulement incident (10), puis l'écoulement séparé (11) par le déflecteur (7), qui est l'écoulement d'attaque des aubages (9), et enfin l'écoulement (12) en sortie d'éolienne. Dans ce cas, les aubages (9) sont fixés sur toute leur longueur, sur leur support (8). Il en résulte une grande robustesse de l'élément, due à son caractère indéformable et son rendement meilleur que dans le cas précédent dû au fait que l'écoulement de fuite n'existe plus. En revanche, il n'est pas possible avec une telle structure d'éolienne d'obtenir un effet de régulation de vitesse.

La présente invention a pour objet de pallier les inconvénients des deux systèmes en conservant les avantages de chacun.

Elle concerne plus précisément une éolienne à alimentation axiale, à échappement radial, et à aubages à géométrie variable, du type comportant un écoulement d'entrée, un déflecteur créant un écoulement d'attaque, des aubages, une embase solidaire de l'ensemble formé par le déflecteur et les aubages couvrant les aubages pour assurer une canalisation de l'écoulements de 'fuite, chaque aubage étant constitué d'une partie indéformable fixée sur l'embase pour assurer une protection mécanique des aubages, caractérisé en ce que la partie fixe indéformable est solidaire du déflecteur et elle-même prolongée vers la périphérie de l'éolienne par une aile mobile et déformable sur cette même embase pour assurer une régulation de la vitesse de l'éolienne.

L'invention sera mieux comprise à l'aide des explications qui vont suivre et des figures jointes parmi lesquelles :
- les figures 1 et 2 sont des illustrations de l'art connu ;
- la figure 3 représente schématiquement un exemple de réalisation d'un élément d'une éolienne conforme à l'invention

Comme le montre la figure 3,et selon une caractéristique de l'invention, les aubages (15), ou pales de l'éolienne, comportent une partie indéformable (15a) et une aile (15b) déformable.

La partie (15a) est solidaire du déflecteur (13) ou d'un support (non visible sur la figure) lui-même solidaire de ce déflecteur. L'aile (15b) est déformable, comme le montrent les pointillés (x) symbolisant la position ouverte de l'une des ailes (15b) d'un aubage (15). La partie indéformable (15a) et l'aile (15b) ne font qu'un seul et même aubage ; elles sont reliées entre elles par une partie arrondie (r) d'épaisseur plus grande que celle des bords de fuite de l'aile à profil aérodynamique.

Selon une autre caractéristique de l'invention, une embase (19) est positionnée sous l'ensemble des aubages (15), solidairement avec le déflecteur (13), de telle sorte qu'il permette la déformation des ailes (15b) tout en empêchant que se produisent des écoulements de fuite. L'écoulement d'entrée (16) est séparé par le déflecteur (13) en un écoulement d'attaque (17) des aubages (15) pour donner un écoulement de sortie (18) sans risque d'écoulement de fuite préjudiciable au rendement de l'éolienne puisque l'embase (19) fait écran.

L'invention permet donc d'une façon conjointe d'obtenir :

- une canalisation de l'écoulement (17) entre chaque aubage (15) limité par l'embase (19) ;
- une déformation des ailes (15b) des aubages (15) qui assure un effet de régulation de la vitesse de rotation pour des débits d'écoulement incident (16) importants ;
- une protection des aubages (15) par l'embase (19) qui confère à l'élément une résistance parfaite aux efforts axiaux.

Selon une autre caractéristique de l'invention, l'embase (19) accomplit une fonction supplémentaire : en effet, elle joue le rôle d'un volant d'inertie. On peut adapter sa densité et même, selon les cas, ses dimensions.

L'éolienne selon l'invention peut être réalisée par usinage et assemblage de pièces, mais peut également être obtenue par des procédés de moulage à partir de moules appropriés.

Dans une application privilégiée, une éolienne selon l'invention est intégrée dans la fusée d'ogive d'un projectile. Cette éolienne permet par exemple l'armement différé de la chaîne pyrotechnique du projectile. La mise en place de cette éolienne conforme à l'invention se fait de manière classique.

## Revendications

1. Eolienne à alimentation axiale, à échappement radial, et à aubages à géométrie variable, du type comportant un écoulement d'entrée (16), un déflecteur (13) créant un écoulement d'attaque (17), des aubages (15), une embase (19) solidaire de l'ensemble formé par le déflecteur (13) et les aubages (15) couvrant les aubages (15) pour assurer une canalisation de l'écoulements de fuite, chaque aubage (15) étant constitué d'une partie indéformable (15a) fixée sur l'embase (19) pour assurer une protection mécanique des aubages (15), caractérisé en ce que la partie fixe indéformable (15a) est solidaire du déflecteur (13) et elle-même prolongée vers la périphérie de l'éolienne par une aile (15b) mobile et déformable sur cette même embase (19) pour assurer une régulation de la vitesse de l'éolienne.

2. Eolienne selon la revendication 1, caractérisée en ce que la partie fixe (15a) est liée à l'aile déformable (15b) par une partie arrondie (r) dont l'épaisseur est maximale entre les deux parties.

3. Eolienne selon l'une des revendications 1 et 2, caractérisée en ce que l'ensemble déflecteur (13) aubage (15) et embase (19), est obtenu par moulage.

4. Projectile, caractérisé en ce qu'il comporte une fusée d'ogive équipée d'une éolienne, selon l'une des revendications précédentes.

## Patentansprüche

1. Windrad mit axialer Beaufschlagung, radialem Auslaß und Schaufeln veränderlicher Geometrie, mit einer Einlaßströmung (16), einem Deflektor (13), welcher eine Antriebsströmung (17) erzeugt, Schaufeln (15), einem Sockel (19), welcher mit der aus dem Deflektor (13) und den Schaufeln (15) bestehenden Einheit fest verbunden ist und die Schaufeln (15) bedeckt, um eine Kanalisierung der Leckströme zu bewirken, wobei jede Schaufel (15) aus einem nicht verformbaren Abschnitt (15a) besteht, der am Sockel (16) als mechanischer Schutz der Schaufeln (19) befestigt ist, dadurch gekennzeichnet, daß der nicht verformbare Abschnitt (15a) fest mit dem Deflektor (13) verbunden und zur Peripherie des Windrades hin durch einen Flügel (15b) verlängert ist, der beweglich und auf dem Sockel (19) verformbar ist, um eine Regelung der Geschwindigkeit des Windrades zu bewirken.

2. Windrad nach Anspruch 1, dadurch gekennzeichnet, daß der feststehende Abschnit (15a) mit dem verformbaren Flügel (15b) durch einen abgerundeten Abschnitt (r) verbunden ist, dessen Dicke zwischen den beiden Abschnitten ihren größten Wert besitzt.

3. Windrad nach Anspruch 1 oder 2, dadurch gekennzeichnet, daß die aus dem Deflektor (13), den Schaufeln (15) und dem Sockel (16) bestehende Einheit durch Gießen erhalten wird.

4. Projektil, dadurch gekennzeichnet, daß es eine Geschoßspitze aufweist, die mit einem Windrad gemäß einem der vorhergehenden Ansprüche ausgerüstet ist.

## Claims

1. Wind turbine having axial inflow, radial outflow and variable-geometry turbine blades, of the type comprising an inlet flow (16), a deflector (13) creating an incident flow (17), turbine blades (15), a base (19) integral with the assembly formed by the deflector (13) and the turbine blades (15) and covering the turbine blades (15) in order to channel the leakage flow, each turbine blade (15) consisting of a non-deformable portion (15a) fixed to the base (19) in order to protect mechanically the turbine blades (15), characterised in that the non-deformable fixed portion (15a) is integral with the deflector (13) and is itself extended towards the periphery of the wind turbine by a movable and deformable aerofoil (15b) on this same base (19) in order to regulate the speed of the wind turbine.

2. Wind turbine according to Claim 1, characterised in that the fixed portion (15a) is connected to the deformable aerofoil (15b) by a rounded portion (r) whose thickness is a maximum between the two portions.

3. Wind turbine according to one of Claims 1 and 2, characterised in that the deflector (13)/turbine blade (15)/base (19) assembly is obtained by moulding.

4. Projectile, characterised in that it includes a warhead fuse equipped with a wind turbine, according to one of the preceding claims.

FIG.1

FIG.2

FIG.3